Europäisches Patentamt

European Patent Office

Office européen des brevets

(11) Veröffentlichungsnummer: **0 049 704**

**A2**

(12) **EUROPÄISCHE PATENTANMELDUNG**

(21) Anmeldenummer: **81890167.0**

(22) Anmeldetag: **08.10.81**

(51) Int. Cl.³: **F 02 D 5/02**

(30) Priorität: **08.10.80 AT 4999/80**

(43) Veröffentlichungstag der Anmeldung:
**14.04.82 Patentblatt 82/15**

(84) Benannte Vertragsstaaten:
**AT DE FR GB**

(71) Anmelder: **Friedmann & Maier Aktiengesellschaft**
**Friedmannstrasse 7**
**A-5400 Hallein bei Salzburg(AT)**

(72) Erfinder: **Lehner, Gerhard, Dipl. Ing. Dr.**
**Pabensteinstrasse 9**
**A-5400 Hallein(AT)**

(72) Erfinder: **Stipek, Theodor, Dipl. Ing.**
**Gamperstrasse 15**
**A-5400 Hallein(AT)**

(74) Vertreter: **Kretschmer, Adolf, Dipl-Ing.**
**Patentanwälte Dipl.Ing. A. Kretschmer Dr. Thomas M.**
**Haffner Schottengasse 3a**
**A-1014 Wien(AT)**

(54) Verfahren zur Steuerung des Förderbeginns einer Einspritzpumpe sowie Vorrichtung zur Durchführung dieses Verfahrens.

(57) Bei einem Verfahren zur Steuerung des Förderbeginns einer Einspritzpumpe für Einspritzbrennkraftmaschinen in Abhängigkeit von Drehmoment unter Berücksichtigung unmittelbar meßbarer Betriebsgrößen, zumindest der Drehzahl, wird das Drehmoment aus der Stellung des Drehzahlwählgliedes bzw. des Fahrpedals ermittelt.

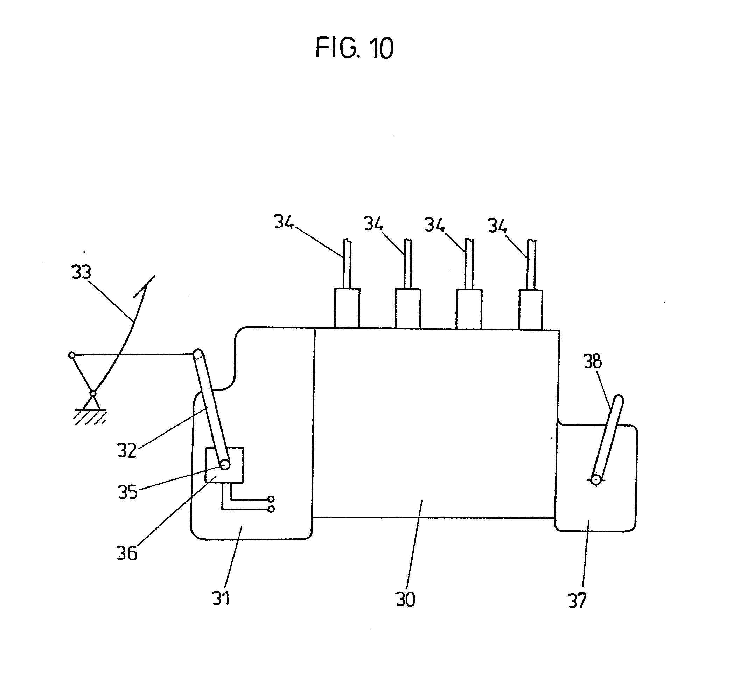

Eine Vorrichtung zur Durchführung dieses Verfahrens enthält einen Speicher zur Speicherung des auszuführenden Programms aufweisenden Prozessor zum Ausführen von mindestens einer Rechenoperation, dem von Meßwertaufnehmern jeweils ein Maß für Betriebsgrößen der Einspritzbrennkraftmaschine darstellende Signale zugeführt werden und der eine Betätigungseinrichtung zur Steuerung des Beginns der Kraftstofförderung der Einspritzpumpe (30) steuert. Hiebei ist der Meßwertaufnehmer (36) für die Ermittlung des jeweils vom Motor abgegebenen Drehmoments als Wegaufnehmer für die Stellung des Drehzahlwählgliedes (32), insbesondere als Winkelstellungsgeber eines Drehzahlwählhebels am oder im Regler (31) ausgebildet (Fig. 10).

FIG. 10

- 1 -

Verfahren zur Steuerung des Förderbeginns einer Einspritzpumpe sowie Vorrichtung zur Durchführung dieses Verfahrens.

Die Erfindung bezieht sich auf ein Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrößen wie Drehzahl, Ladedruck, Motortemperatur od.dgl., gemessen werden und das jeweils vom Motor abgegebene Drehmoment ermittelt wird, worauf in Abhängigkeit von dem ermittelten Drehmoment unter Berücksichtigung zumindest der gemessenen Drehzahl der Förderbeginn der Kraftstoffeinspritzpumpe verstellt wird, sowie auf eine zur Durchführung dieses Verfahrens geeigneten Vorrichtung.

Es ist bekannt, daß die Schadstoffemission von Verbrennungsmotoren durch geeignete Wahl des Zündzeitpunktes bei Ottomotoren bzw. des Einspritzbeginns bei Einspritzbrennkraftmaschinen, insbesondere bei Dieselmotoren, wesentlich verringert werden kann. Dabei ist als Parameter für die relative Verlagerung dieses maßgeblichen Punktes neben der Motordrehzahl auch die Last von Wichtigkeit, die bei Ottomotoren durch die Einleitung des Unterdruckes im Saugrohr auf eine federbelastete Membrane zur Zündzeitpunktverstellung eingesetzt wird.

Aus der DE-OS 29 03 875 ist bereits eine Einrichtung zur Durchführung des eingangs genannten Verfahrens bekannt geworden, bei welcher neben einem der Drehzahl proportionalen elektrischen Signal die Stellung der Regelstange der Einspritzpumpe zur Ermittlung der Belastung des Motors herangezogen wird, wobei an der Regelstange ein Positionsgeber angeordnet ist. Die Stellung der Regelstange ist aber insbesondere im Schubbetrieb ein ungenügendes Kriterium für das tatsächliche Ausmaß der Belastung des Motors und die Verwendung von Positionsgebern an der Regelstange erfordert eine zusätzliche Kompensation der thermischen Ausdehnung der Regelstange im Betrieb. Insbesondere bei Kraftfahrzeugmotoren, bei welchen häufig ein Schubbetrieb auftritt, kann daher mit der bekannten Einrichtung die Schadstoffemission nicht in der erforderlichen Weise optimiert werden.

Die Erfindung zielt nun darauf ab, ein Verfahren der eingangs genannten Art zu schaffen, mit welchem die Schadstoffemission und der Verbrauch einer Einspritzbrennkraftmaschine, insbesondere eines Dieselmotors, bei allen Betriebszuständen und insbesondere auch im Schubbetrieb verringert werden kann. Zur Lösung dieser Aufgabe besteht die Erfindung im wesentlichen darin, daß das Drehmoment aus der Stellung des Drehzahlwählgliedes bzw. des Fahrpedals ermittelt wird. Während die Stellung der Regelstange bei einem Verstellregler im Schubbetrieb keinen Aufschluß über die tatsächliche, vom Motor abverlangte Leistung gibt, läßt sich aus der Stellung des Drehzahlwählgliedes je nach Art des Motors unmittelbar auf den Belastungszustand des Motors und damit auf das vom Motor abverlangte Drehmoment schließen. Die Stellung des Mengenwählhebels bzw. des Drehzahlwählhebels gibt bei einem Leerlaufenddrehzahlregler unmittelbar ein Maß für das vom Motor abverlangte Drehmoment unter Berücksichtigung der jeweils gleichzeitig gemessenen Drehzahl. Bei den für Fahrzeuge nahezu ausschließlich verwendeten Verstellreglern wird erfindungsgemäß so vorgegangen, daß die Solldrehzahl entsprechend der Winkellage des Drehzahlwählhebels eines Verstellreglers abgegriffen wird, mit der Istdrehzahl des Motors verglichen wird und bei Vorliegen einer Minderdrehzahl von einem Prozessor das entsprechende bei dieser Drehzahl größtmögliche Motordrehmoment zur Egalisierung dieser Drehzahlabweichung ermittelt wird. Durch die Messung des Signals für das Motordrehmoment und die Verarbeitung dieser Meßgröße in einem Mikroprozessor läßt sich eine Stellgröße für die Verstellung des Einspritzzeitpunktes errechnen, wobei

- 3 -

die lastabhängige Verstellung des Spritzbeginns beim Dieselmotor neben der Verringerung der Schadstoffemission auch eine Verbesserung der Leistungs- und Verbrauchswerte und eine Verminderung der thermischen und mechanischen Beanspruchung der Motorbauteile mit sich bringt.

Der Einspritzzeitpunkt muß in bekannter Weise in Abhängigkeit von der Motordrehzahl verstellt werden und die Verwendung eines Mikroprozessors ermöglicht es, in besonders einfacher Weise die Einflüsse von Motordrehzahl und Lastmoment gleichzeitig in eine gemeinsame Stellgröße für die Verstellung des Einspritzzeitpunktes umzusetzen. Die Verstellung des Einspritzzeitpunktes kann je nach Konstruktion der Einspritzpumpe in verschiedener Weise erfolgen; beispielsweise kann bei einer Ausbildung, bei welcher die Einspritzpumpe über einen Kipphebel von einer Nockenwelle angetrieben wird, der Lagerpunkt durch Betätigung eines Exzenters verschoben werden, wodurch sich ein früherer oder späterer Einspritzzeitpunkt ergibt. Die Verstellung dieses Exzenters kann beispielsweise hydraulisch oder elektrisch, beispielsweise mittels eines Schrittmotors, erfolgen. Eine Einrichtung zur Feststellung des Förderbeginns einer Einspritzpumpe ist beispielsweise aus der AT-PS 298 881 bekannt geworden. Bei dieser Ausbildung wird eine Kupplungsmuffe axial verschoben, wodurch die beiden durch die Muffe verbundenen Wellen, welche Außenverzahnungen mit verschiedenen Steigungen aufweisen, gegeneinander verdreht werden. Die Verschiebung der Kupplungsmuffe dieser bekannten Einrichtung kann beispielsweise hydraulisch, elektrisch und insbesondere mittels eines Schrittmotors erfolgen. Bei Einspritzpumpen, welche eine gesonderte Regelstange für die Verstellung des Einspritzzeitpunktes aufweisen, kann beispielsweise ein Schrittmotor unmittelbar kraftschlüssig mit dieser Regelstange gekoppelt werden. Ein Schrittmotor könnte ohne Zwischenschaltung von weiteren Bauteilen vom Mikroprozessor angesteuert werden. Für eine hydraulische Betätigung des Spritzverstellers müßte eine entsprechende mechanisch-hydraulische Umsetzung des Stellsignales erfolgen. Erfindungsgemäß kommen eine Reihe von Signalen für eine Auswertung in einem Mikroprozessor in Betracht, welche entweder direkt proportional der Last sind oder aber in einer einfachen Gesetzmäßigkeit zur Last stehen.

Die erfindungsgemäße Vorrichtung zur Durchführung dieses Verfahrens weist Meßwertaufnehmer für Betriebsgrößen wie Drehzahl, Ladedruck, Motortemperatur od.dgl., sowie wenigstens einen weiteren Meßwertaufnehmer zur Ermittlung des jeweils vom Motor abgegebenen Drehmomentes auf, welche Meßwertaufnehmer mit einem Prozessor zum Ausführen von mindestens einer Rechenoperation verbunden sind, welcher Prozessor einen Speicher zur Speicherung des auzuführenden Programms aufweist, und mit einer dem Prozessor verbundenen Betätigungseinrichtung zur Steuerung des Beginns der Kraftstofförderung der Einspritzpumpe. Die genannte Vorrichtung ist erfindungsgemäß im wesentlichen dadurch gekennzeichnet, daß der Meßwertaufnehmer für die Ermittlung des Motordrehmoments als Wegaufnehmer für die Stellung des Drehzahlwählgliedes, insbesondere als Winkelstellungsgeber eines Drehzahlwählhebels am oder im Regler ausgebildet ist. Es kann somit ein besonders einfacher und betriebssicherer Meßwertgeber im Rahmen des erfindungsgemäßen Verfahrens verwendet werden.

Das den Mikroprozessor enthaltende Steuergerät kann mit einem Stellglied für die Einstellung des Beginns der Kraftstofförderung verbunden sein, welches von einem hydraulischen oder pneumatischen Arbeitskolben, einem elektrischen Hubmagneten, einem Elektromotor, einem elektrischen Stellmotor oder einem elektrischen Schrittmotor gebildet ist. Da dem Steuergerät nicht nur ein lastabhängiges Signal, sondern in der Regel auch ein der Drehzahl entsprechendes Signal zugeführt wird, lassen sich komplizierte Zusammenhänge mit einem ge-

- 5 -

meinsamen Stellglied dieser Art bewerkstelligen. Hiebei kann vorzugsweise so vorgegangen werden, daß auf Grund der in das Steuergerät eingesteuerten Drehzahl- und Lastsignale ein im Steuergerät gespeicherter Spritzverstellungskennwert abgerufen und dem Stellglied zugeordnet wird.

Die Erfindung wird nachfolgend an Hand der Zeichnung näher erläutert, in welcher eine Einrichtung zur last- und drehzahlabhängigen Spritzverstellung gezeigt ist, bei welcher die Spritzverstellung durch Differenzdrehbewegung zwischen Pumpenantrieb und Pumpennockenwelle erzeugt wird.

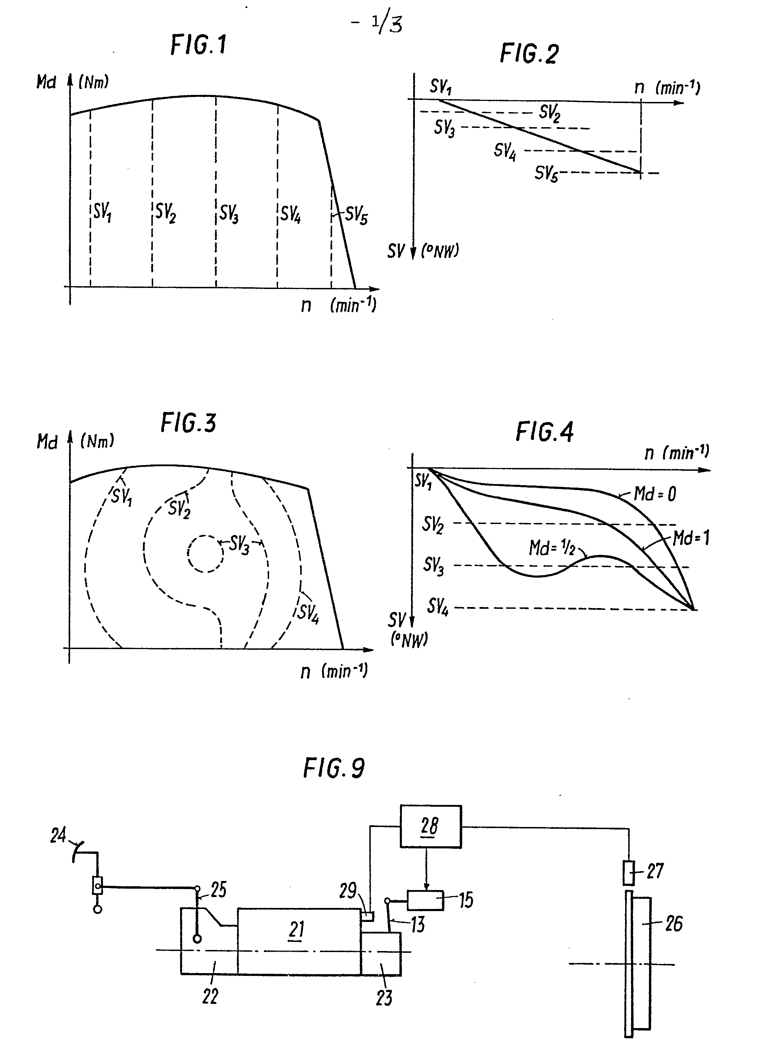

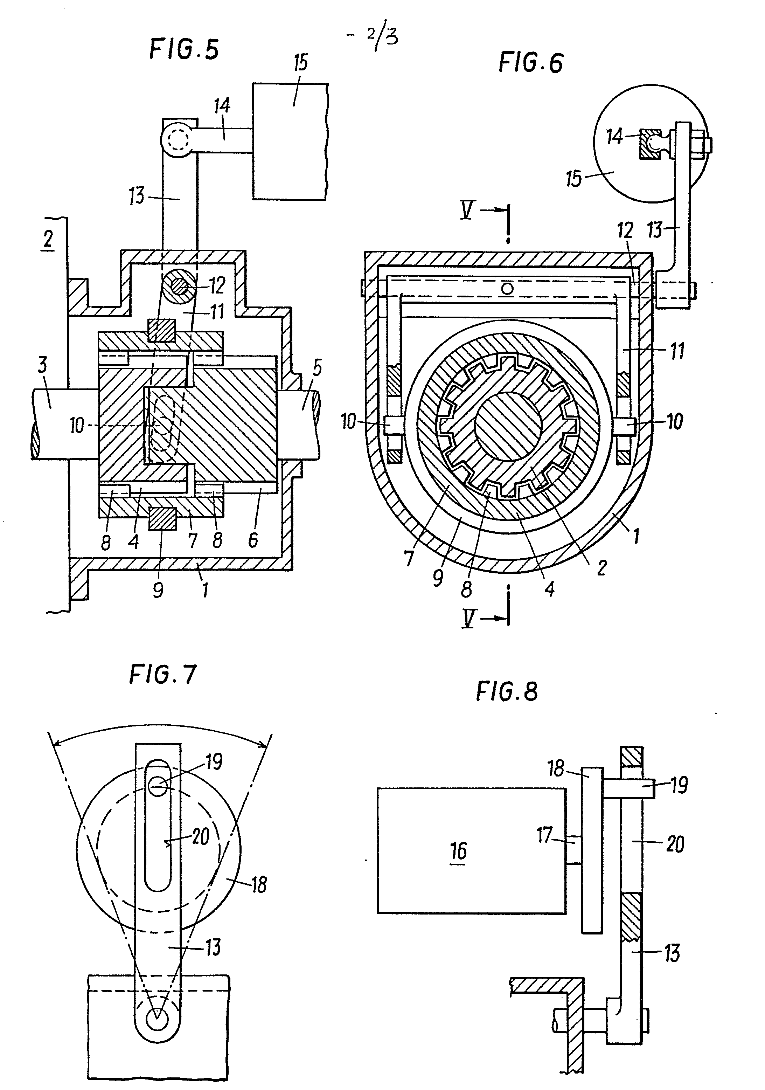

Fig. 1 und 2 zeigen den linearen Spritzverstellungsdrehzahlzusammenhang unabhängig vom Drehmoment des Motors, wie sie bei konventionellen Regelungen vorgenommen·wird. Die Spritzverstellungskurven im Motorkennfeld sind daher Geraden über der Drehzahl. In Fig. 3 und 4 sind drehzahl- und lastabhängige Spritzverstellungen dargestellt, wie sie erfindungsgemäß erzielbar sind. Fig. 5 und 6 zeigen eine Einrichtung zur Verstellung des Drehwinkels zwischen Pumpenantrieb und Pumpennockenwelle im Schnitt, wobei Fig. 5 einen Schnitt nach der Linie V-V der Fig. 6 darstellt. Fig. 7 und 8 zeigen eine Ausbildung des Stellgliedes als Schrittmotor, Fig. 9 einen schematischen Gesamtaufbau für ein Einspritzsystem und Fig. 10 eine schematische Darstellung der Anordnung eines Meßwertaufnehmers für die Stellung des Drehzahlwählgliedes.

In Fig. 1 ist auf der Abszisse die Motordrehzahl in $min^{-1}$ und auf der Ordinate das Motordrehmoment in Nm aufgetragen. Wie aus Fig. 2 hervorgeht, ergibt die Spritzverstellung bei verschiedenen Motordrehzahlen aufgetragen auf der negativen Ordinatenachse als Nockenwellenwinkel in Grad vor dem oberen Totpunkt des Kolbens der Brennkraftmaschine eine Gerade, welche bei der konventionell Regelung unabhängig vom Motordrehmoment ist. Abweichend von derartigen konventionellen Ver-

0049704

- 6 -

stellcharakteristiken sind in den Fig. 3 und 4 den Fig. 1 und 2 analoge Darstellungen für verschiedene Motordrehmomente wiedergegeben, wobei beliebige drehzahl- und lastabhängige Spritzverstellungen möglich sein sollen.

Die Möglichkeit für die Erzielung der in Fig. 3 und 4 wiedergegebenen Charakteristiken wird beispielsweise durch eine Ausbildung der Verstelleinrichtung für den Einspritzzeitpunkt nach den Fig. 5 und 6 gegeben, wobei das Stellglied von einer Steuereinrichtung angesteuert wird. In Fig. 5 und 6 ist mit 1 ein Gehäuse bezeichnet, das z.B. an dem Einspritzpumpengehäuse 2 angeflanscht ist. Im Gehäuse 1 befindet sich die Welle 3, die eine Außenverzahnung 4 besitzt. In der Welle 3 und im Gehäuse 1 ist eine zweite Welle 5 gelagert, die ebenfalls eine Außenverzahnung 6 trägt. Die Schiebemuffe 7, die eine Innenverzahnung 8 besitzt, ist über einen Gleitring 9 längs verschieblich. Durch die Kombination von Schrägverzahnungen bzw. Geradverzahnungen und Schrägverzahnungen wird durch die Längsverschiebung der Schiebemuffe 7 eine Relativbewegung der Wellen 3 und 5 zueinander erreicht. Auf dem Gleitring 9 sind Bolzen 10 angebracht, die über ein Gestänge 11, von einer Welle 12 und einem Außenhebel 13 betätigt werden. Je nach Lage des Außenhebels 13 ergibt sich nun eine ganz definierte Stellung der Schiebemuffe 7 und damit eine entsprechende Drehdifferenz zwischen den Wellen 3 und 5. Da die Drehdifferenz zwischen den Wellen 3 und 5 der Spritzverstellung proportional ist, kann damit über den Außenhebel 13 jede beliebige Spritzverstellung erreicht werden. Der Außenhebel 13 ist über eine Stange 14 mit einem Stellmotor 15 verbunden. Dieser steuert in Funktion der Motorlast und des Motordrehmoments die Lage der Schiebemuffe 7 und damit die Spritzverstellung. Der Stellmotor 15 kann sowohl nach dem hydraulischen, pneumatischen oder elektrischen Prinzip arbeiten. Voraussetzung ist, daß der Stellmotor 15 allen vorkommenden Last- und Dreh-

- 7 -

zahländerungen des Verbrennungsmotors folgen kann.

Fig. 7 und 8 zeigen ein Ausführungsbeispiel mit einem Schrittmotor 16. Der Schrittmotor zeichnet sich durch eine hohe
Schrittfrequenz und eine hohe Genauigkeit aus. Auf der Welle
17 sitzt eine Scheibe 18, in der sich ein Bolzen 19 befindet.
Dieser Bolzen 19 greift in eine Nut 20 des Außenhebels 13 ein.
Je nach Drehlage des Schrittmotors wird nun der Außenhebel
13 betätigt und damit die erforderliche Spritzverstellung
erreicht.

In Fig. 9 ist der schematische Gesamtaufbau für ein konventionelles Einspritzsystem dargestellt. Die Erfindung ist
jedoch nicht notwendigerweise mit einem derartigen Einspritzsystem gekoppelt, sondern ist für jedes beliebige Einspritzsystem gedacht. An der Pumpe 21 befindet sich ein Regler 22 und der angebaute Spritzversteller 23. Über den Fahrfußhebel 24 wird nun der Außenhebel 25 des Reglers betätigt
und damit die erforderliche Motordrehzahl bzw. Motorlast
vorgewählt. An dem Schwungrad 26 des Verbrennungsmotors befindet sich ein Aufnehmer 27, der die Drehzahl mißt. Diese
Drehzahl wird in das Steuergerät 28 übertragen. Gleichzeitig
wird über einen Aufnehmer das Motormoment festgestellt. In
Fig. 9 ist dieser Aufnehmer mit 29 schematisch angedeutet.
Das Signal des Meßwertaufnehmers 29, welches dem Lastmoment
proportional ist, wird an das Steuergerät 28 weitergeleitet.
In dem Steuergerät 28 sind die Soll-Spritzverstellungskennwerte gespeichert. Aus der Messung von Motordrehmoment und
Motordrehzahl ist der Lastpunkt im Motorkennfeld genau definiert, und damit auch die erforderliche Spritzverstellung.
Das Steuergerät 28 steuert nun entsprechend dem Motorlastpunkt den Stellmotor 15 an, der über den Außenhebel 13 die
gewünschte Spritzverstellung einstellt.

In Fig. 10 ist der Motorschutz mit 30 angedeutet. Mit dem

- 8 -

Motor verbunden ist ein Verstellregler 31, dessen Drehzahlwählglied 32 von einem Fahrpendel 33 verstellt wird. Die zu den Einspritzdüsen führenden Einspritzleitungen sind mit 34 angedeutet.

Die Schwenkachse 35 des Drehzahlwählgliedes 32 ist mit einem Meßwertaufnehmer 36 für die Erfassung des Drehwinkels des Drehzahlwählgliedes 32 verbunden, wobei die Signale dieses Meßwertaufnehmers dem Steuergerät 28 zugeführt werden können. Der Meßwertaufnehmer 36 kann hiebei als wegabhängiger Schalter, als Winkelkodierer, Potentiometer od.dgl., ausgebildet sein.

Es ist weiters ein Spritzzeitpunktversteller 37 vorgesehen, dessen Betätigungsarm 38 in Abhängigkeit von den gemessenen Werten verstellt werden kann.

Als weitere Ausführungsform ist denkbar, daß die beliebige last- und drehzahlabhängige Spritzverstellung über eine lastabhängige Bedienung des Außenhebels der Einrichtung gemäß der AT-PS 298 881 erreicht wird. Die drehzahlabhängige Spritzverstellung kann in Abhängigkeit von dem beispielsweise in der AT-PS 298 881 dargestellten Drehzahlmeßwerk erfolgen. Bei Verwendung eines Mikroprozessors lassen sich die Werte für die Drehzahl und für lastabhängige Signale in beliebiger Weise kombinieren, sodaß den speziellen Erfordernissen einer bestimmten Brennkraftmaschine in verbessertem Maße Rechnung getragen werden kann.

Patentansprüche:

1. Verfahren zur Steuerung des Förderbeginns einer Einspritzpumpe für Einspritzbrennkraftmaschinen, insbesondere zur
Kraftstoffeinspritzung an einem Dieselmotor, bei welchem
Betriebsgrößen wie Drehzahl, Ladedruck, Motortemperatur od.
dgl., gemessen werden und das jeweils vom Motor abgegebene
Drehmoment ermittelt wird, worauf in Abhängigkeit von dem
ermittelten Drehmoment unter Berücksichtigung zumindest der
gemessenen Drehzahl der Förderbeginn der Kraftstoffeinspritzpumpe verstellt wird, dadurch gekennzeichnet, daß
das Drehmoment aus der Stellung des Drehzahlwählgliedes bzw.
des Fahrpedals ermittelt wird.

2. Verfahren nach Anspruch 1, dadurch gekennzeichnet, daß
die Stellung des Mengenwählhebels bei einem Leerlauf-Enddrehzahlregler als Maß für das Motordrehmoment durch einen
Signalgeber abgegriffen wird und gemeinsam mit einem Drehzahlsignal in einem Prozessor verarbeitet wird.

3. Verfahren nach Anspruch 1 oder 2, dadurch gekennzeichnet,
daß die Solldrehzahl entsprechend der Winkellage des Drehzahlwählhebels eines Verstellreglers abgegriffen wird, mit
der Istdrehzahl des Motors verglichen wird und bei Vorliegen
einer Minderdrehzahl von einem Prozessor das entsprechende
bei dieser Drehzahl größtmögliche Motordrehmoment zur Egalisierung dieser Drehzahlabweichung ermittelt wird.

4. Vorrichtung zur Durchführung des Verfahrens nach einem
der Ansprüche 1 bis 3 mit Meßwertaufnehmern (27) für Betriebsgrößen wie Drehzahl, Ladedruck, Motortemperatur od. dgl.,
sowie wenigstens einem weiteren Meßwertaufnehmer (29, 36) zur
Ermittlung des jeweils vom Motor abgegebenen Drehmoments,
welche Meßwertaufnehmer mit einem Prozessor zum Ausführen von
mindestens einer Rechenoperation verbunden sind, welcher
Prozessor einen Speicher zur Speicherung des auszuführenden
Programms aufweist, und mit einer mit dem Prozessor verbun-

0049704

- 10 -

denen Betätigungseinrichtung(13, 15) zur Steuerung des Beginns der Kraftstofförderung der Einspritzpumpe(21, 30),
dadurch gekennzeichnet, daß der Meßwertaufnehmer(29, 36) für
die Ermittlung des Motordrehmoments als Wegaufnehmer für
die Stellung des Drehzahlwählgliedes(32), insbesondere als
Winkelstellungsgeber eines Drehzahlwählhebels am oder im
Regler(31) ausgebildet ist.

0049704

- 1/3

FIG.1

FIG.2

FIG.3

FIG.4

FIG.9

FIG.5

FIG.6

FIG.7

FIG.8

FIG. 10